(19) Europäisches Patentamt
European Patent Office
Office européen des brevets

(11) **EP 0 701 497 B1**

(12) **EUROPÄISCHE PATENTSCHRIFT**

(45) Veröffentlichungstag und Bekanntmachung des Hinweises auf die Patenterteilung:
**11.02.1998 Patentblatt 1998/07**

(21) Anmeldenummer: 94918847.8

(22) Anmeldetag: 07.06.1994

(51) Int. Cl.$^6$: **B23B 51/02**

(86) Internationale Anmeldenummer:
**PCT/EP94/01851**

(87) Internationale Veröffentlichungsnummer:
**WO 94/29056 (22.12.1994 Gazette 1994/28)**

(54) **SPANABHEBENDES WERKZEUG, INSBESONDERE BOHR- ODER FRÄSWERKZEUG**

STOCK-REMOVING TOOL, IN PARTICULAR DRILL OR MILLING CUTTER

OUTIL D'USINAGE PAR ENLEVEMENT DE COPEAUX, NOTAMMENT UN FORET OU UNE FRAISE

(84) Benannte Vertragsstaaten:
**AT BE CH DE ES FR GB IT LI NL SE**

(30) Priorität: **08.06.1993 DE 4318970**
**19.05.1994 DE 4417445**

(43) Veröffentlichungstag der Anmeldung:
**20.03.1996 Patentblatt 1996/12**

(73) Patentinhaber: **KIPPE, Michael**
**D-44892 Bochum (DE)**

(72) Erfinder: **KIPPE, Michael**
**D-44892 Bochum (DE)**

(56) Entgegenhaltungen:
**EP-A- 0 158 820          EP-A- 0 172 148**
**EP-A- 0 207 025          EP-A- 0 298 061**
**DE-A- 2 817 488          DE-A- 4 003 506**

Printed by Xerox (UK) Business Services
2.15.8/3.4

**Beschreibung**

Die Erfindung betrifft ein drehend angetriebenes, spanabhebendes Werkzeug, insbesondere Bohr- oder Fräswerkzeug, mit mindestens einer gebogenen Schneidkante an der Stirnseite, welche bei der Bohr- und Fräsarbeit in Richtung der Drehachse in das Werkstück zustellbar ist.

Ein Bohrer mit einer gattungsgemäßen Schneidkantenkontur ist beispielsweise aus der DE 28 51 183 C2 bekannt. Der darin beschriebene Wendelbohrer ist an seiner Stirnseite mit einer gebogenen Schneidkante versehen, deren Krümmung nahe der Werkzeugachse, d.h. der Rotationsachse, ein Maximum aufweist und zum Umfang hin kontinuierlich abnimmt.

Eine gattungsgemäße Schneidkantenkontur für Wendelbohrer wird ebenfalls in der DE-PS 11 73 310 diskutiert; Gegenstand der DE-AS 27 37 827 ist ein derart ausgestalteter Schaftfräser.

Aus der DE 31 31 794 C2 ist ein Bohrer bekannt, der ebenfalls die nach dem Stand der Technik bekannten Gattungsmerkmale aufweist. Darin wird vorgeschlagen, daß die Schneidkanten unterteilt sind und der durch die Seitenkanten der Spannut eingeschlossene Spannutwinkel zum Schaftstegwinkel in Beziehung steht. Dadurch wird eine erhöhte Schaftfestigkeit erreicht und die Spanabgabeprobleme werden verringert. Dabei ist die Schneidkante ebenfalls gekrümmt bzw. abgewinkelt.

Ein bisher ungelöstes Problem bei Bohr- und Fräswerkzeugen nach dem Stand der Technik ist der unkontrollierbar ungleichmäßige Verschleiß der Schneidkante entlang ihrem Verlauf. Durch alle bisher bekannten gebogenen Schneidkantenkonturen ist keine befriedigende, grundsätzliche Lösung dieses Problems erreicht worden. Daraus ergibt sich die Aufgabe der Erfindung, die Schneidkantenkontur an der Stirnseite von drehend angetriebenen, spanabhebenden Werkzeugen dahingehend weiterzubilden, daß deren Verschleiß minimiert wird.

Zur Lösung dieser Aufgabe schlägt die Erfindung vor, daß in der Projektion auf einer senkrecht zur Drehachse verlaufenden Ebene der Winkel zwischen der Schneidkanten-Tangente und dem zugehörigen Umfangsgeschwindigkeitsvektor über die gesamte Länge der Schneidkante an jedem Punkt der Schneidkante kleiner als 90° ist, und daß der Winkel, entlang der gesamten Schneidkante konstant ist.

Werkzeuge, insbesondere Bohr- und Fräswerkzeuge, mit der erfindungsgemäßen Schneidkantenkontur haben einen deutlich geringeren Verschleiß und demzufolge eine größere Standzeit, als die nach dem Stand der Technik bekannten Bohr- und Fräswerkzeuge mit gebogener Schneidkantenkontur.

Die besonders vorteilhaften technischen Eigenschaften der erfindungsgemäßen Schneidkantenkontur resultieren daraus, daß über die gesamte Länge der Schneidkante eine stumpfschälende Spanabtragung vom Werkstück vermieden wird. Die stumpf-schälende Spanabtragung, bei der sich die Schneidkante ausschließlich quer zum Werkstück bewegt, führt nämlich besonders häufig in den betreffenden Bereichen der Schneidkante zu einem Ausbrechen und vorzeitigen Verschleiß der Schneidkante. Dieser Veschleißeffekt ist insbesondere an solchen Bohr- und Fräswerkzeugen zu beobachten, die bei der Bohr- und Fräsarbeit in Richtung der Drehachse zugestellt werden. Demgegenüber liegt bei der erfindungsgemäßen Schneidengeometrie über die gesamte Länge der Schneidkante ein "ziehender" Schnitt vor, bei welchem die Schneidkante beim Eingriff in das Werkstück relativ zum Werkstück in ihrer Längsrichtung, d.h. hier in der tangentialen Richtung, bewegt wird. Durch diesen ziehenden Schnitt über die gesamte Länge der Schneidkante wird der vorzeitige Verschleiß durch örtliches Ausbrechen der Schneidkante deutlich herabgesetzt.

Die erfindungsgemäße Ausgestaltung der Schneidkantenkontur kann gleichermaßen sowohl an konvex als auch an konkav gekrümmten Schneidkanten realisiert werden.

Eine Merkmal der Erfindung sieht vor, daß der Winkel zwischen der Schneidkanten-Tangente und dem Umfangsgeschwindigkeitsvektor entlang der gesamten Schneidkante konstant ist. Dadurch wird eine gleichmäßige Belastung entlang der gesamten Schneidkante erreicht. Besondere Bedeutung kommt dieser Ausführungsform im stark beanspruchten Bereich des Werkzeugzentrums, d.h. im Bereich der Rotationsachse, eines Bohrers oder Fräsers zu, weil auch dort der Winkel von 90° nicht auftritt und Schäden durch die oben diskutierte stumf-schälende Spanabtragung vermieden werden.

Es ist weiterhin vorteilhaft, wenn der Winkel zwischen der Schneidkanten-Tangente und dem Umfangsgeschwindigkeitsvektor überall größer oder gleich 55° ist. Oberhalb dieses Winkels kommen die vorteilhaften Eigenschaften der erfindungsgemäßen Schneidengeometrie besonders gut zum Tragen.

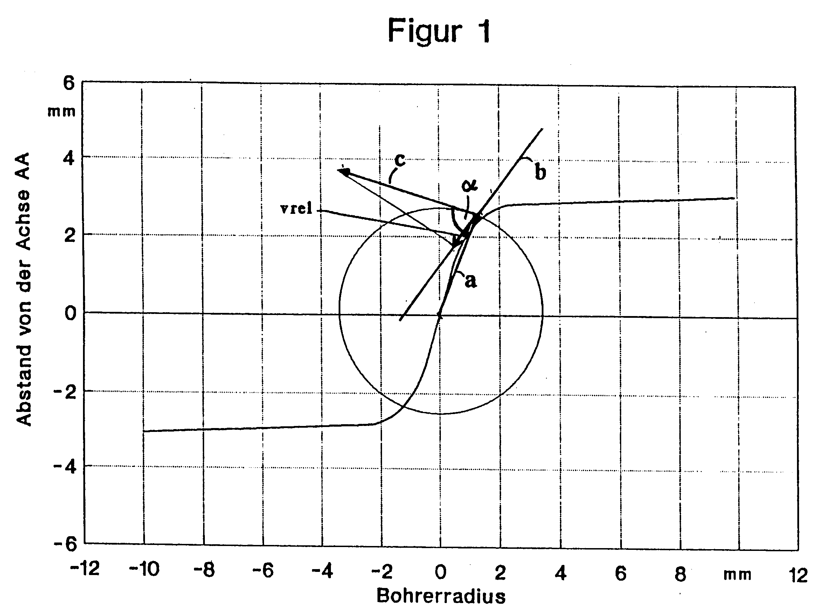

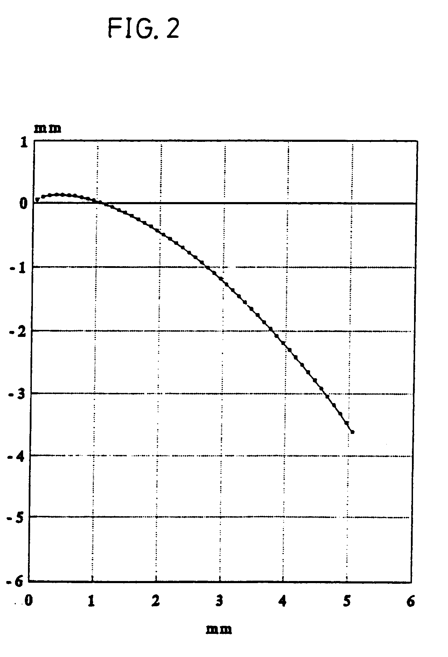

Ein Ausführungsbeispiel einer erfindungsgemäßen Schneidkantenkontur wird im folgenden anhand der Figuren 1 und 2 exemplarisch erläutert.

Fig. 1 zeigt schematisch eine axiale Ansicht der Stirnseite eines rotierenden, spanabhebenden Werkzeuges mit einer beliebigen Schneidkantengeometrie. Die Schneidkante ist in ihrer Projektion auf einer senkrecht zur Drehachse verlaufenden Ebene dargestellt. Gemäß dieser Darstellung bewegt sich bei Rotation des Werkzeuges ein Punkt der Schneidkante tangential zu dem Kreis mit dem Radius a, also in die Richtung des Umfangsgeschwindigkeitsvektors c. Seine Bahngeschwindigkeit beträgt demzufolge $c = r \cdot \omega$. Die Schneidkanten-Tangente an dem dargestellten Punkt der Schneidkante ist mit b bezeichnet. Der Winkel zwischen dem Umfangsgeschwindigkeitsvektor c und der Schneidkanten-Tangente b ist mit $\alpha$ bezeichnet. Dabei

ist aus der Zeichnung deutlich erkennbar, daß der Umfangsgeschwindigkeitsvektor c immer dann eine Bewegungskomponente $V_{rel}$ in Richtung der Schneidkanten-Tangente b - und damit dem oben diskutierten ziehenden Schnitt - erzeugt, wenn der Winkel α kleiner als 90° ist.

In Fig. 2 ist eine einzelne, erfindungsgemäße Schneidkante schematisch dargestellt. Die Rotationsachse des Werkzeugs liegt hierbei bei x = 0 mm / y = 0 mm. Für den dargestellten Schneidenverlauf beträgt der Winkel α entlang der gesamten Schneidkante konstant 70°.

## Patentansprüche

1. Drehend angetriebenes, spanabhebenden Werkzeug, insbesondere Bohr- oder Fräswerkzeug, mit einer gebogenen Schneidkante an der Stirnseite, welche bei der Bohr- und Fräsarbeit in Richtung der Drehachse in das Werkstück zustellbar ist, **dadurch gekennzeichnet**, daß in der Projektion auf einer senkrecht zur Drehachse verlaufenden Ebene der Winkel (α) zwischen der Schneidkanten-Tangente (b) und dem zugehörigen Umfangsgeschwindigkeitsvektor (c) über die gesamte Länge der Schneidkante an jedem Punkt der Schneidkante kleiner als 90° ist, und dadurch, daß der Winkel (α) entlang der gesamten Schneidkante konstant ist.

2. Werkzeug nach dem Anspruch 1, dadurch gekennzeichnet, daß der Winkel (α) zwischen der Schneidkanten-Tangente (b) und dem Umfangsgeschwindigkeitsvektor (c) überall größer oder gleich 55° ist.

## Claims

1. A rotably driven, chip-detaching tool, in particular a drilling or milling tool, comprising a cranked cutting edge arranged at the front end, which may be moved towards the work piece along the rotation axis during drilling and milling work, **characterized in,** that, when projected onto a plane extending perpendicularly to the rotation axis, the angle (α) between the tangent line (*b*) to the cutting edge and the appropriate vector (*c*) of the circumferential velocity is smaller than 90° in every point along the whole length of the cutting edge, and that the angle (α) is constant along the whole cutting edge.

2. A tool according to claim 1, characterized in, that the angle (α) between the tangent line (*b*) to the cutting edge and the vector (*c*) of the circumferential velocity is larger or equal 55° everywhere.

## Revendications

1. Outil enleveur de copeaux entraîné rotativement, en particulier outil de perçage et d'alésage présentant une arête de coupe incurvée sur la face frontale, laquelle pendant les travaux d'alésage et de fraisage permet une pénétration réglable dans la pièce dans le sens de l'axe de rotation, **caractérisé en ce que** dans la projection sur un plan perpendiculaire à l'axe de rotation, l'angle (α) formé par la tangente de l'arête de coupe (b) et le vecteur correspondant (c) de la vitesse circonférencielle est inférieur à 90° sur toute la longueur de l'arête de coupe, en tout point de ladite arête et

2. Outil selon la revendication 1, caractérisé en ce que l'angle (α) formé par la tangente de l'arête de coupe (b) et le vecteur (c) de la vitesse circonférencielle est partout supérieur ou égal à 55°.

# Figur 1

EP 0 701 497 B1

FIG. 2